# EUROPEAN PATENT SPECIFICATION

(11) **EP 4 259 542 B1**
(45) Date of publication and mention of the grant of the patent: **02.07.2025**
(21) Application number: 21834904.1
(22) Date of filing: 09.12.2021
(51) Int. Cl.: B65D 65/46, B65D 85/804

(54) **COMPOSTABLE CAPSULE FOR PREPARING INFUSION OR SOLUBLE BEVERAGES**
KOMPOSTIERBARE KAPSEL ZUR HERSTELLUNG VON AUFGUSSGETRÄNKEN ODER LÖSLICHEN GETRÄNKEN
CAPSULE COMPOSTABLE POUR PRÉPARER DES BOISSONS INFUSÉES OU SOLUBLES

(30) Priority: 10.12.2020 IT 202000030299
(43) Date of publication of application: 18.10.2023
(73) Proprietor: Guala Dispensing FP S.p.a., 15121 Alessandria (IT)
(72) Inventor: SCHENONE, Matteo, 15121 Alessandria (IT)
(74) Representative: Gualeni, Nadia
(86) International application number: PCT/IB2021/061495
(87) International publication number: WO 2022/123478

(56) References cited:
- WO-A1-2016/139554
- WO-A1-2020/026101
- WO-A2-2016/193961
- IT-A1- UA20 161 354

## Description

The subject of this invention is a capsule for the preparation of infusion or soluble beverages, in particular a biodegradable and/or compostable capsule that is self-opening due to an increase in pressure inside the capsule.

In the sector capsules are known for the packaging of concentrated products (e.g., in the form of powder, granules, leaves) in predetermined, single-use doses, for the impromptu preparation of beverages (such as tea, coffee, herbal teas, milk, chocolate, etc.) by means of the introduction, into said capsule, of a fluid under pressure (mostly hot water). The penetration of the essence to be infused or dissolved contained inside the capsule by said flow of hot water, delivered by an extraction machine, results in the impromptu preparation of the beverage.

Different types of automatic or semi-automatic beverage preparation machines are known in the industry.

A first type of machine envisages the perforation of the capsule on both sides, in order to allow the pressurized fluid to be injected into the cup on one side, and the beverage to flow out from the opposite side. This first type of machine is intended for very simple capsules, comprising a cup closed on both sides, respectively by a bottom and a cover.

A second type of machine envisages perforating the capsule only on one side to allow pressurized fluid to be injected into the cup. This second type of machine is in fact intended for complex capsules, comprising a cup equipped with an outlet for the beverage on one side and a closing cover on the opposite side, as well as its own inner opening means. Said opening means, usually in the form of cutting or piercing tips or contours, are activated by increasing the pressure within the cup to pierce or tear an inner sealing disc and thereby allow the beverage to escape from the outlet opening at the bottom of the cup. This type of capsule is rather complex from the construction point of view, especially with regard to the construction of the opening means.

Typically, to make and dispense the beverage, the flow of hot water is injected inside the capsule with a pressure of about 20 atmospheres for a time ranging from 15 to 90 seconds. Thus, the capsules on the market are mainly made of mineral and synthetic materials such as, for example, aluminum and plastic, which provide said capsule with the necessary features to resist mechanical stresses, in particular pressure, and thermal stresses to which it is subjected during use.

As it is well known, these capsules are single-use and once the dispensing of the beverage is over, they become waste which is difficult to dispose of because of the materials from which they are made. In a more environmentally responsible vein, capsules have been made of biodegradable and/or compostable materials, as described for example in WO 2016/139554 A1 aimed at a compostable coffee capsule. As explained in WO 2016/139554 A1, the features that a material must possess in order to be defined as "compostable" are set forth in European Standard EN 13432 "Requirements for packaging recoverable through composting and biodegradation - Test scheme and evaluation criteria for the final acceptance of packaging." WO 2016/139554 A1 describes a capsule comprising a very simple cup, enclosed by a bottom and a cover, and intended for machines that envisage the simultaneous perforation of the capsule on both sides. Document WO 2020/026101 A1 discloses a compostable capsule that forms the basis for the preamble of claim 1.

In the sector, biodegradable and/or compostable capsules are known only of the type comprising a cup closed on both sides and intended for machines that envisage the simultaneous perforation of the capsule on both sides.

However, in order to create proper water pressure inside the cartridge and to ensure optimal extraction quality, the opening of the dispensing side of the capsule should only occur after the injection of the pressurized fluid.

In the sector, there is therefore a need for a biodegradable and/or compostable capsule provided with its own inner opening means that are activated only after the injection of the pressurized fluid. As mentioned above, however, this type of capsule is rather complex from the construction point of view, especially with regard to the construction of the opening means. This complexity is accentuated when using biodegradable and/or compostable materials, which are typically characterized by poor mechanical and thermal features.

The object of this invention is to construct a capsule for the preparation of infusion or soluble beverages that solves the problems of the prior art while taking into account the needs of the industry.

In particular, it is an object of this invention to provide a biodegradable and/or compostable capsule that is self-opening by the increase of the internal pressure and that is capable of withstanding the mechanical and thermal stresses to which it is subjected during use.

This object is achieved by a capsule for preparing infusion or soluble beverages according to claim 1. The dependent claims describe preferred embodiments of the invention.

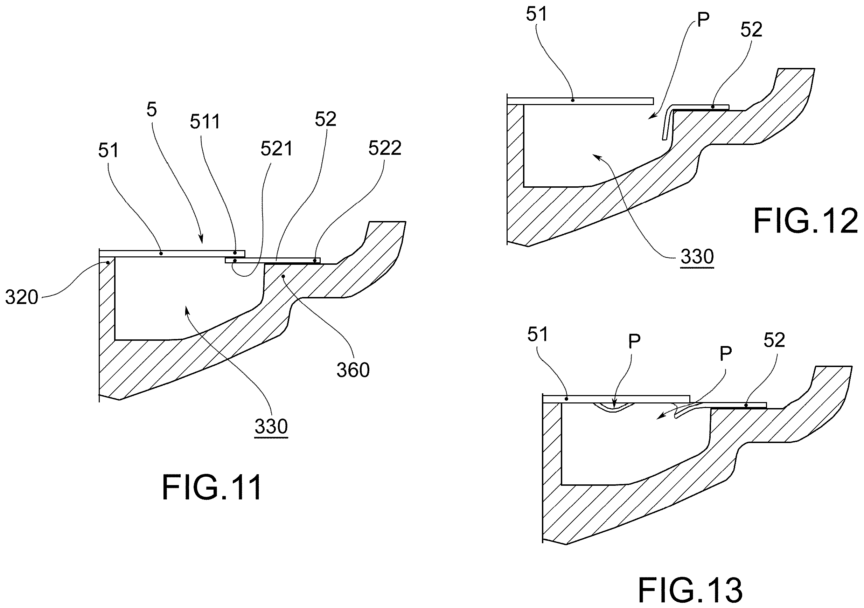

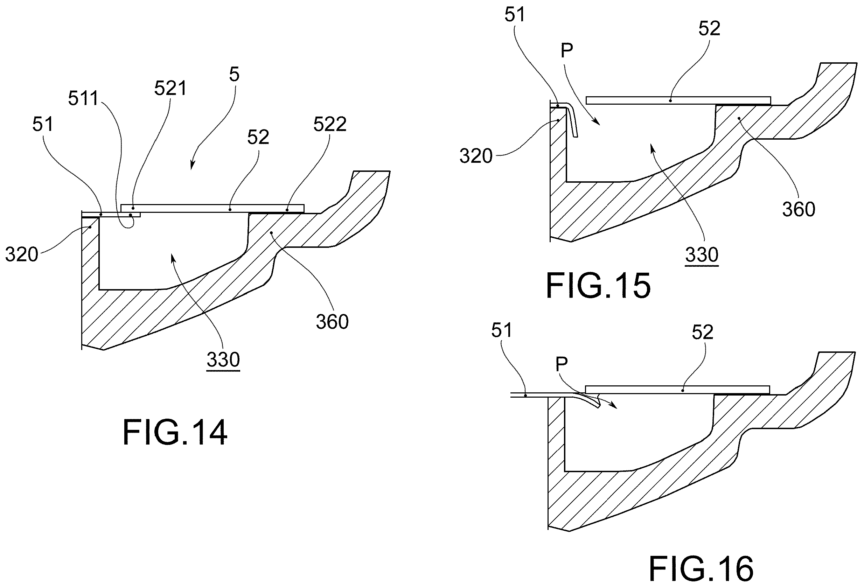

The features and advantages of a capsule for the preparation of infusion or soluble beverages according to this invention will become apparent from the following description, given by way of non-limiting example and according to the accompanying figures, wherein:
- Fig. 1 is a sectional view of a capsule for preparing infusion or soluble beverages according to this invention, in one embodiment;
- Fig. 2 is a side sectional view of the capsule in Fig. 1;
- Fig. 3 is a view of the outside of the capsule in Fig. 1, in particular of the bottom for the outlet of the beverage;
- Fig. 4 shows a detail of the capsule in Fig. 1, specifically the inner base with the outlet of the beverage;
- Fig. 5 is a sectional view of a capsule for preparing infusion or soluble beverages according to this invention in a further example embodiment;
- Fig. 6 is a sectional side view of the capsule in Fig. 5;
- Fig. 7 is a view of the outside of the capsule in Fig. 5, specifically the bottom for the outlet of the beverage;
- Fig. 8 shows a detail of the capsule in Fig. 5, specifically the inner base with the outlet of the beverage;
- Fig. 9 and 10 show a first self-opening mode of the capsules in Fig. 1 and 5, respectively, wherein the sealing disc is a single disc;
- Fig. 11 through 16 show a second self-opening mode of the capsules of Fig. 1 and 5, wherein the sealing disc is a disc composed of a central portion and an annular portion, wherein:
   - in the variant of Fig. 11 to 13, the sealing disc comprises a rigid central portion and a flexible annular portion: Fig. 11 shows the capsule still closed, Fig. 12 shows the capsule open with complete detachment of the flexible annular portion, Fig. 13 shows the capsule open with partial detachment of the flexible annular portion;
   - in the variant of Fig. 14 to 16, the sealing disc comprises a central flexible portion and a rigid annular portion: Fig. 14 shows the capsule still closed, Fig. 15 shows the capsule open with complete detachment of the central flexible portion, Fig. 16 shows the capsule open with partial detachment of the flexible central portion.

With reference to the attached figures, a capsule for the preparation of infusion or soluble beverages is shown, indicated by the reference number 1.

The capsule 1 comprises a body or cup 2 suitable to define an inner volume V wherein at least one substance S to be infused or dissolved, typically in powder or granular form, is contained.

On one side, the cup 2 is provided with a bottom 3 and on the opposite side with an inlet opening 21 defined by an externally projecting edge 4.

The capsule 1 comprises a cover 6 fastened to the edge 4 to seal the cup 2 on top.

The capsule 1 comprises a sealing disc 5, arranged within the cup 2, which closes the capsule 1. In effect, between the cover 6 and the disc 5 the inner volume V is defined wherein the substance S to be infused or dissolved is contained.

At the bottom 3, the cup 2 is provided with an outlet opening 31 to allow the outflow of the infused beverage.

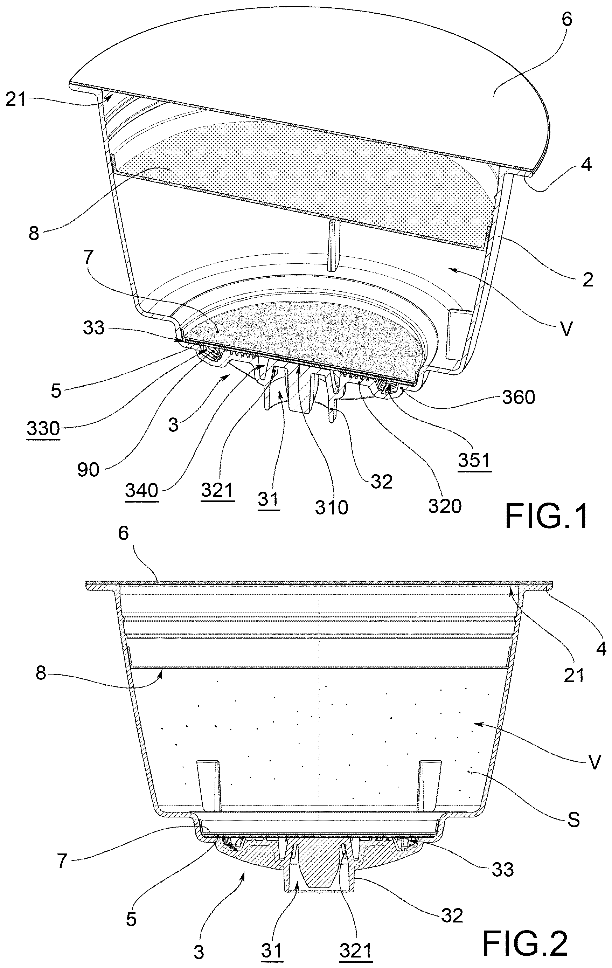

In the example of Fig. 1, a plurality of inner windows 321 flow into a nozzle 32 terminating in the outlet opening 31. In use, the beverage flows into the nozzle 32 which directs it into the final container, such as a cup or a glass.

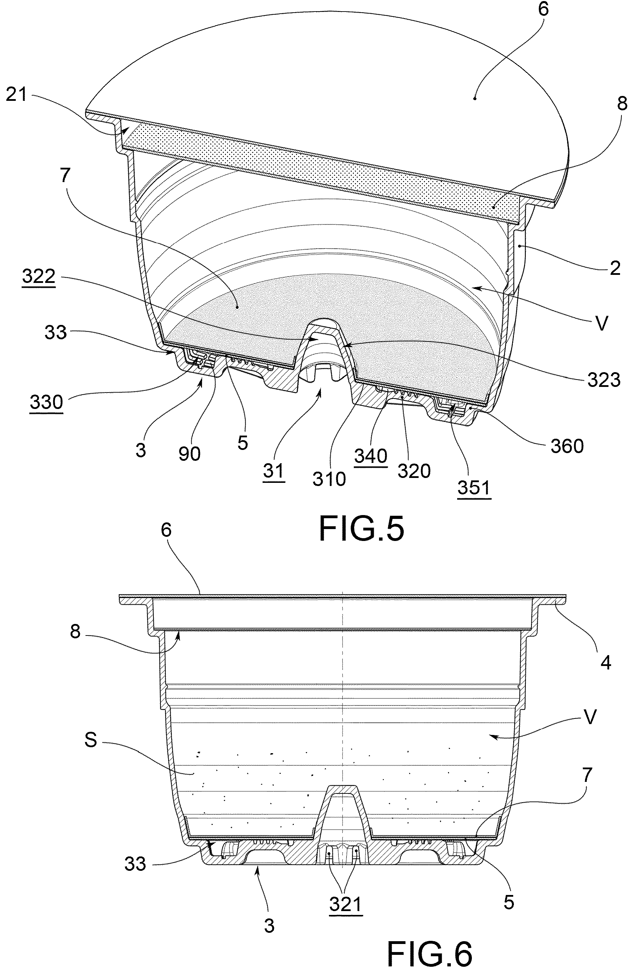

In the example in Fig. 5, a plurality of inner windows 321 open into a compartment 322 terminating in the outlet opening 31. In said example, the capsule 1 is in effect provided with a protuberance 323, at the central portion 310 of the base 33, facing the inside of the cup 2 in the direction of the cover 6. The compartment 322 defines a space of a size suitable to accommodate a lower perforation element of the machine for preparing the beverage. In use, in the compartment 322, without coming into contact with the capsule 1, the perforation element of the machine is inserted, which then acts only as a dispensing element as it is provided with channels for collecting the beverage and conveying it into the final container, such as a cup or a glass.

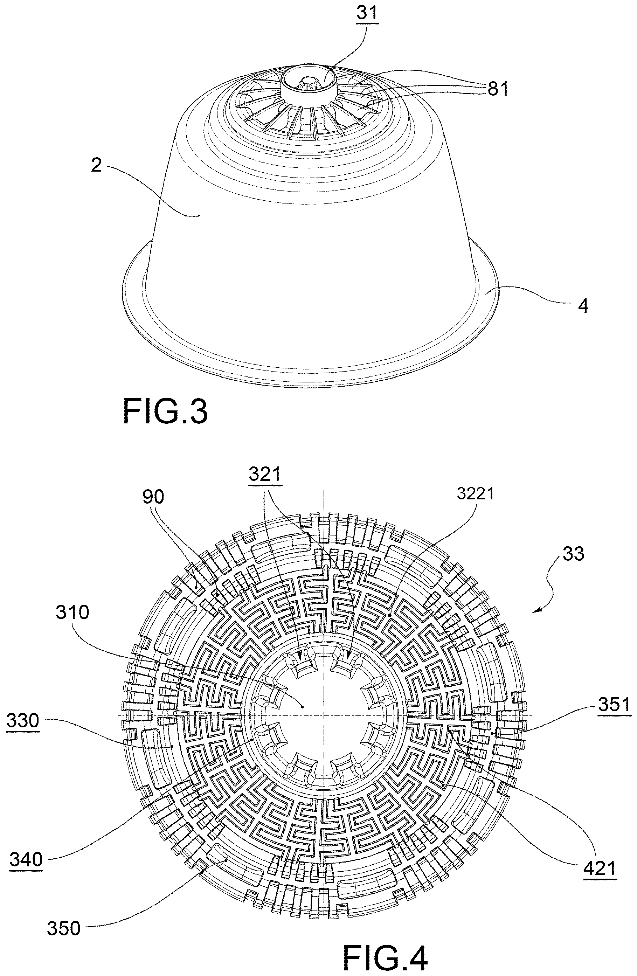

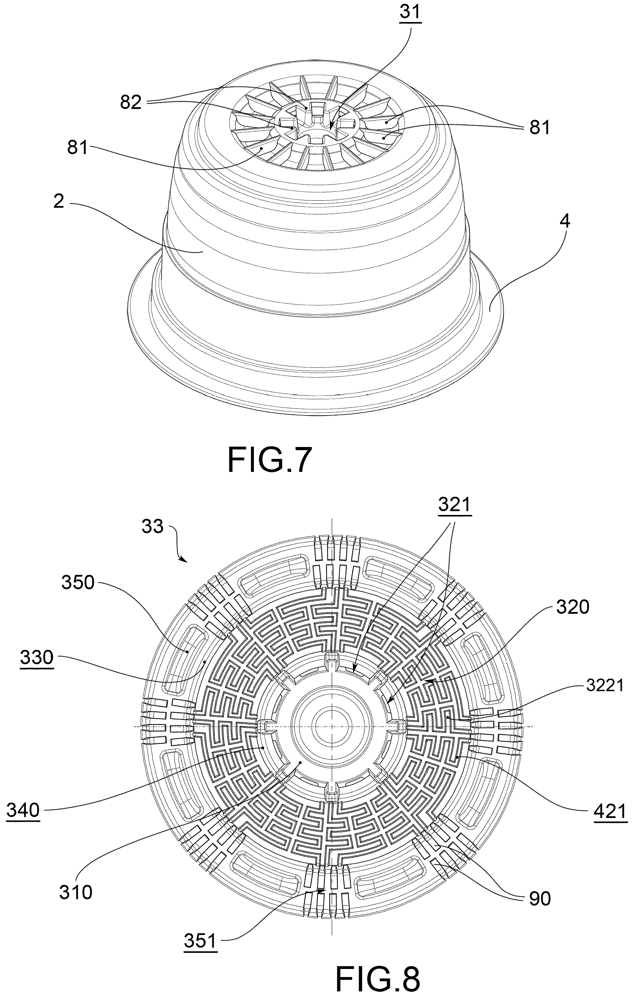

The cup 2 comprises therein a base 33, shown for example in Fig. 4 and 8, provided with a plurality of vertically projecting protuberances. The surface of the protuberances is substantially flat and free of cutting, piercing, or tearing elements. In effect, the sealing disc 5 that closes the capsule 1 is fastened by means of gluing or welding on the surface of the protuberances of the base 33. The disc 5 is in effect located between the inner volume V and the base 33, below the substance 11.

The cup 2 is made of biodegradable and compostable material.

Preferably, the cup 2 is made of compostable material suitable for ensuring dimensional stability and thermal and mechanical resistance. An example of suitable materials for this object are compostable polyesters, particularly polylactic acid (PLA) and polybutylene succinate (PBS) and/or polyhydroxyalkanoate (PHA).

In one example, talc is added to the layer of material comprising polylactic acid (PLA) and/or polybutylene succinate (PBS) and/or polyhydroxyalkanoate (PHA). The talc content in this layer of material is between 10% and 40%, preferably between 15% and 30%.

Preferably, the cup 2 is made of a compostable material comprising polylactic acid (PLA) and/or polybutylene succinate (PBS).

Preferably, the cup 2 is made of a compostable material comprising polylactic acid (PLA) and/or polybutylene succinate (PBS) having at least one of the following features:
- tensile yield strength between 30 and 50 MPa (ASTM standard D638) or between 35 and 50 (ISO 527-1);
- tensile elongation at break greater than 10% (ASTM standard D638) or between 10% and 35% (ISO 527-1);
- bending elasticity modulus between 2000 and 2500 MPa (ASTM D790) or between 2000 and 4500 MPa (ISO 527-1).

In an example embodiment, the cup 2 is made of a compostable material comprising polylactic acid (PLA) and having at least two of the following features:
- tensile yield strength between 30 and 40 MPa (ASTM Standard D638);
- tensile elongation at break greater than 10% (ASTM Standard D638);
- bending elastic modulus between 2000 and 2500 MPa (ASTM D790).

In an example embodiment, the cup 2 is made of a compostable material comprising polybutylene succinate (PBS) and having at least two of the following features:
- elongation at break between 30% and 40% (ISO 527-1);
- tensile elastic modulus between 4000 and 4500 MPa (ISO 527-1).

In an example embodiment, the cup 2 is made of a compostable material comprising polyhydroxyalkanoate (PHA) and having at least two of the following features:
- tensile strength between 30 and 35 MPa (ISO 527-1);
- tensile elongation at break between 2% and 5% (ISO 527-1);
- elastic modulus between 1500 and 2500 MPa (ISO 527-1).

Said features make it possible to obtain a compostable cup 2 with high thermal and mechanical resistance that may be penetrated by a flow of liquid at high temperature (between 90° and 95°C) and pressure (between 10 and 12 bar) for the entire dispensing time (about 1 minute) without softening and deforming (e.g. at the bottom and at the nozzle) and without breaking (e.g. at the side walls).

Preferably, the cup 2 has a wall thickness between 0.4 mm and 0.8 mm, preferably between 0.5 mm and 0.7 mm.

The cup 2 is made of compostable material, which is typically characterized by poor mechanical and thermal properties. Therefore, the bottom 3 of the cup 2 has been externally reinforced with outer reinforcement fins 81. Said outer reinforcement fins are arranged at the labyrinth portion 320. Preferably, the outer reinforcement fins 81 extend radially and form a uniform circumferential succession. Preferably, the outer reinforcement fins 81 are provided in large numbers to provide adequate support for the bottom 3 when the pressure inside the cup 2 increases. For example, the outer reinforcement fins 81 are provided in a number greater than 15.

Moreover, in the variant embodiment of Fig. 5, center reinforcements 82 have also been added at the center portion 310. Preferably, the central reinforcements 82 extend radially and form a uniform circumferential succession. Preferably, the central reinforcements 82, which are substantially triangular in shape, are provided in a number greater than 5.

The cover 6 is also made of biodegradable and compostable material.

Preferably, the cover 6 is a multilayer compostable material having at least one layer that acts as an oxygen and/or vapor barrier. For example, said barrier layer is the top outer layer, made of metallized cellulose.

Preferably, the cover 6 has at least one layer made of compostable material comprising polylactic acid (PLA) and/or polybutylene succinate (PBS) and/or polyhydroxyalkanoate (PHA). For example, said layer is the lower outer layer in order to provide a compostable material compatible with the welding to the cup 2.

Preferably, the cover 6 is made of a multilayer compostable material having at least one of the following features:
- breaking load (ASTM standard D882) MD between 20 and 25 MPa, TD between 7 and 13 MPa;
- elongation at break (ASTM standard D882) MD between 20 and 25%, TD between 65 and 75%.

The disc 5 is made of biodegradable and compostable material.

In the variant in Fig. 1, the disc 5 is fully flexible.

In the variants in Fig. 11 through 16, the disc 5 is only partially flexible. The material described below refers to the flexible part.

Preferably, the disc 5 is a multilayer compostable material having at least one layer that acts as an oxygen and/or vapor barrier. For example, said barrier layer is an intermediate layer made of metallized cellulose or metallized cellophane.

Preferably, the disc 5 has at least one layer made of a compostable material suitable to be in contact with the food substance contained in the cup 2. For example, such a layer is the top outer layer, made of paper or cellophane.

Preferably, the disc 5 has at least one compostable material layer comprising polylactic acid (PLA) and/or polybutylene succinate (PBS). For example, said layer is the lower outer layer in order to provide a compostable material compatible with welding to the cup 2.

Preferably, the disc 5 is a multilayer compostable material having at least one of the following features:
- breaking load (ISO standard 527 1-3) MD between 85 and 95 MPa, TD between 35 and 45 MPa;
- elongation at break (ISO standard 527 1-3) MD between 10 and 20%, TD between 40 and 50.

Said features make it possible to obtain a compostable disc 5 with high thermal and mechanical resistance that may withstand the action of a flow of liquid at high temperature (between 90° and 95°C) and pressure (between 10 and 12 bar) for the entire dispensing time (about 1 minute) without softening and deforming completely to such an extent that it does not allow the capsule to open correctly or even it adheres completely to the base 33 of the cup 2, closing the discharge passageway of the beverage.

In the variant of Fig. 11 through 16, the disc 5 also comprises a rigid portion. In this variant, the rigid part is made of the same material used for the cup 2.

As shown in Fig. 4 and 8, the base 33 comprises a central portion 310 covering the at least one outlet opening 31. The base 33 further comprises at least one substantially annular-shaped labyrinth portion 320 arranged concentrically about the central portion 310, and consequently about the outlet opening 31. The base 33 also comprises a perimeter edge 360 to which the sealing disc 5 is attached by gluing or welding.

The base 33 is provided, between the perimeter edge 360 and the labyrinth portion 320, with a collection depression 330 suitable to collect the infused beverage and allowing it to flow toward the labyrinth portion 320. The collection depression 330 defines a space suitable to accommodate, without obstructing it, the deformation of the sealing disc 5, or at least a portion thereof, when the pressure exerted by the fluid within the capsule 1 reaches a certain opening threshold level.

The base 33 is further provided, between the labyrinth portion 320 and the central portion 310, with a conveying depression 340 suitable to collect the infused beverage and allow it to flow, through the at least one outlet opening 31, to the outside of the capsule 1.

The labyrinth portion 320 has a plurality of capillary channels 421 that allow the beverage to flow toward the outlet opening 31 and then out of the capsule 1. Conversely, said capillary channels 421 prevent the passage of the beverage when the pressure inside the capsule 1 drops below a threshold value, to prevent the beverage from dripping at the end of dispensing.

Each capillary channel 421 connects the collection depression 330 with the conveying depression 340.

The capillary channel 421 is closed at the top by the disc 5 made of compostable material, which typically has poor mechanical and thermal properties. When the disc 5 is a flexible film made of compostable material, as the pressure and temperature in the capsule 1 increases, it tends to soften and adhere to the contour of the base 33.

Thus, the capillary channels 421 have been made with a smaller cross section, to avoid possible obstructions by the sealing disc, and with an elevated length, to ensure an effective anti-drip effect.

Preferably, the capillary channel 421 has a zigzag or "square wave" pattern.

Preferably, the labyrinth 30 comprises a number of capillary channels 421 between 10 and 40, preferably between 20 and 30.

The labyrinth portion 320 comprises capillary channels 421 separated by dividers 322 on which the sealing disc 5 is permanently attached. Preferably, the surface occupied by the dividers 322 is greater than the surface occupied by the capillary channels 421 to adequately support the sealing disc 5 made of compostable material.

As mentioned above, when the disc 5 is a flexible film of compostable material, as the pressure and temperature in the capsule 1 increases, it tends to soften and adhere to the contour of the base 33.

Therefore, the capsule 1 is provided, at the base 33, with supports 90 suitable to keep the sealing disc 5 raised during the self-opening phase so that it does not adhere completely to the bottom of the collection depression 330, thus preventing the discharge of the beverage. Preferably, the supports 90 are radial protrusions arranged at the bottom of the collection depression 330.

Preferably, the capsule 1 is provided, at the base 33, with supports 350 on which the sealing disc 5 is fastened or at least supported during the pre-opening phase. Preferably, the supports 90 are circular arc protuberances projecting from the bottom of the collection depression 330. When provided, the supports 350 define a plurality of recesses 351 or compartments therebetween. In particular, a recess 351 is defined between a pair of adjacent supports 350. The recess 351 defines a space suitable to accommodate, without obstructing it, the deformation of at least a portion of the sealing disc 5 when the pressure exerted by the fluid within the capsule 1 reaches a certain opening threshold level. The recess 351 defines a preferred space for the deformation of the disc 5.

Preferably, when the substance S is ground coffee, the capsule 1 comprises a filter 7 fastened below the substance 11, just above the disc 5.

The filter 7 is made of biodegradable and compostable material.

Preferably, the filter 7 is made of paper fiber or cellulose and comprises polylactic acid (PLA) and/or polybutylene succinate (PBS) at least on the lower side to provide a compostable material compatible with the welding to the cup 2.

Preferably, when the substance S is ground coffee, the capsule 1 comprises a film 8, permeable or microperforated, fastened at some distance above the substance S, below the cover 6. The film 8 is equipped with holes to allow the uniform passage of the injected fluid from the machine toward the food powder.

The film 8 is made of biodegradable and compostable material.

Preferably, the film 8 is made of polylactic acid (PLA) and/or polybutylene succinate (PBS) at least on the lower side to provide a compostable material compatible with welding to the cup 2.

As shown in Fig. 1 and 5, the capsule 1 for the preparation of infusion or soluble beverages comprises a sealing disc 5 adapted to seal the cup 2 on the bottom.

The disc 5 is fastened to the base 33 in an at least partially releasable manner such that it at least partially detaches therefrom by the increase in pressure within the volume V in which the food substance S is contained.

The disc 5 is fastened, either permanently or releasably, to the perimeter edge 360.

The disc 5 is permanently fastened to the labyrinth portion 320 and the central portion 310.

In use, the capsule 1 is inserted into a slot provided in the extraction machine, which pierces the cover 6 and introduces a pressurized fluid (mostly hot water) into the inner volume V in which the substance S is contained. The presence of the sealing disc 5 closing the bottom 3 of the capsule 1 allows the pressurized fluid to remain for a certain time interval in contact with the substance 11 to be infused or dissolved, ensuring an optimal beverage. The pressure exerted by the fluid inside the capsule 1 rises until it reaches a certain threshold level, or opening pressure (e.g., between 4 and 8 bars), which pushes on the disc 5 until it causes the self-opening that allows for the outflow of the beverage.

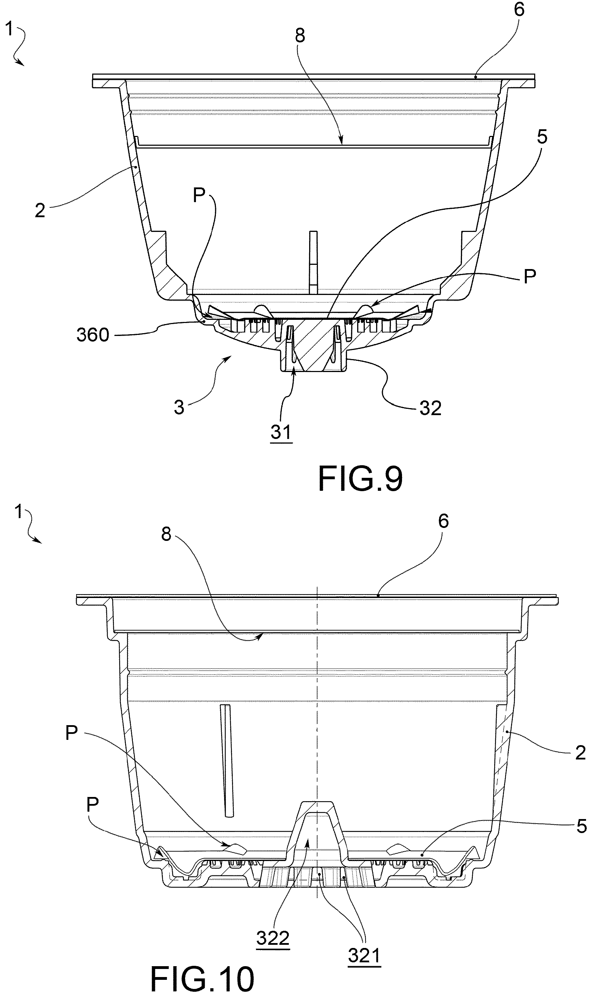

In particular, as shown in Fig. 9 to 16, the opening of the capsule 1 is caused by the at least partial deformation of the sealing disc 5.

In the variant embodiment shown in Fig. 9 and 10, the capsule 1 opens according to a first self-opening mode. In such a variant embodiment, the sealing disc 5 is flexible, made in one piece, free of weak spots or cuts, and attached in an at least partially releasable manner to the perimeter edge 360. Due to the increase in pressure within the capsule 1, an outer edge of the disc 5 deforms and separates at least partially from the perimeter edge 360 causing the previously provided sealing effect to fail and a passageway P to open for the outflow of the beverage.

In the embodiment shown in Fig. 11 to 16, the capsule 1 opens according to a second self-opening mode. In said variant embodiment, the sealing disc 5 is a composite disc, that is, comprising a central portion 51 and an outer annular portion 52 fastened to each other in an at least partially releasable manner.

The disc 5 is permanently fastened to the base 33, i.e., at least to the perimeter edge 360 and to the labyrinth portion 320. As seen in Fig. 11 and 14, the outer edge 522 of the annular portion 52 is fastened on the perimeter edge 360 of the base 33, and the center of the central portion 51 is fastened to the labyrinth portion 320. The inner edge 521 of the annular portion 52 is fastened in an at least partially releasable manner to the perimeter edge 511 of the central portion 51.

As discussed above, when the disc 5 is a flexible film made of compostable material, as the pressure and temperature in the capsule 1 increases, it tends to soften and adhere to the contour of the base 33. Thus, in the capsule 1, the disc 5 comprises a rigid portion and a flexible portion joined together. This reduces the risk of the disc 5 softening and adhering completely to the base.

Preferably, the edge of the flexible portion is fastened below the edge of the rigid portion. As a result of the increase in pressure within the capsule 1, the flexible portion of the disc 5 deforms and separates at least partially from the rigid portion causing the previously provided sealing effect to fail and opening at least one passageway P for the outflow of the beverage.

In the example in Fig. 11 to 13, in the capsule 1, the central portion 51 of the disc 5, intended to cover at least the labyrinth portion 320, is a rigid disc. This reduces the risk of the disc 5 softening and obstructing the capillary passages 421. The annular portion 52 is on the other hand a flexible film so as to be able to deform at least partially and allow the capsule 1 to open.

In the example of Fig. 14 to 16, in the capsule 1, the annular portion 52 of the disc 5, intended to be fastened to the perimeter edge 360, is rigid. This makes it easier for it to be welded to the perimeter edge 360.

In the variant embodiment of Fig. 12 and 15, the central portion 51 and the annular portion 52 are fastened to each other by means of a releasable circular weld. Therefore, due to the increase in pressure within the capsule 1, the flexible portion of the disc 5 deforms and separates completely from the rigid portion forming one wide passageway P for the outflow of the beverage.

In the variant embodiment of Fig. 13 and 16, the central portion 51 and the annular portion 52 are fastened to each other by a partially releasable circular weld. Therefore, due to the increase in pressure within the capsule 1, the flexible portion of the disc 5 deforms and only partially separates from the rigid portion forming a plurality of small passageways P for the outflow of the beverage.

A capsule according to this invention is usable for packaging concentrated products (in the form of powder or granules or leaves) in predetermined, single-use doses, for the impromptu preparation of beverages such as leaf or soluble tea, ground or instant coffee, herbal teas, milk, chocolate, or other dehydrated and soluble products.

Innovatively, a capsule for the preparation of infusion or soluble beverages according to this invention is fully biodegradable and compostable and provided with its own inner opening means which are activated only later with respect to the injection of the pressurized fluid.

Advantageously, the biodegradable and compostable capsule according to this invention is self-opening by increasing the internal pressure and is able to withstand the mechanical and thermal stresses to which it is subjected during use.

Advantageously, the biodegradable and compostable capsule according to this invention is provided with reinforcements on the bottom to resist the mechanical and thermal stresses to which it is subjected during use.

Advantageously, the biodegradable and compostable capsule according to this invention is self-opening by the at least partial deformation of a partially rigid sealing disc to resist the mechanical and thermal stresses to which it is subjected during use.

It is understood that a person skilled in the art could make modifications to the capsule for the preparation of infusion or soluble beverages described above, all of which are contained within the scope of protection as defined by the following claims.

## Claims

1. A compostable capsule (1) for making infusion or soluble beverages, comprising:
- a cup (2) in which there is defined an inner volume (V) in which there is contained at least one substance (S) to be infused or dissolved; said cup (2) being provided:
-- on one side, with a bottom (3) with an outlet opening (31) for the beverage,
-- on the opposite side, with an inlet opening (21) of a fluid;
-- internally with an inner base (33) comprising:
--- a central portion (310) covering the opening (31),
--- a labyrinth portion (320) arranged about the central portion (310),
--- a perimeter edge (360) arranged about the central portion (310),
--- a beverage collection depression (330) arranged between the perimeter edge (360) and the labyrinth portion (230),
--- a beverage conveying depression (340) arranged between the labyrinth portion (230) and the central portion (310);
- a cover (6) sealingly fastened to the cup (2), to close the opening (21);
- an at least partially flexible sealing disc (5) sealingly fastened on the inner base (33) of the cup (2) to ensure, together with the cover (6), a seal of the inner volume (V);
wherein the opening for the outflow of the beverage is determined by the at least partial deformation of the sealing disc (5), a deformation which loses the sealing of the volume (V);
wherein the cup (2), the cover (6), and the sealing disc (5) are made of compostable material;
**characterized in**
**that** the cup (2), the sealing disc (5) and the cover comprise polylactic acid (PLA) and/or polybutylene succinate (PBS) and/or polyhydroxyalkanoate (PHA).

2. The capsule (1) according to claim 1, wherein the cup (2) is made of compostable material having at least one of the following features:
- tensile yield strength between 30 and 50 MPa (ASTM Standard D638) or between 35 and 50 (ISO 527-1);
- tensile elongation at break greater than or equal to 10% (ASTM Standard D638) or from 10% to 35% (ISO 527-1);
- bending elastic modulus between 2000 and 2500 MPa (ASTM D790) or between 2000 and 4500 MPa (ISO 527-1).

3. The capsule (1) according to any of the preceding claims, wherein the cup (2) is made of compostable material comprising polylactic acid (PLA) and having at least two of the following features:
- tensile yield strength between 30 and 40 MPa (ASTM Standard D638);
- tensile elongation at break greater than equal to 10% (ASTM Standard D638);
- bending elastic modulus between 2000 and 2500 MPa (ASTM D790).

4. The capsule (1) according to claim 1 or 2, wherein the cup (2) is made of a compostable material comprising polybutylene succinate (PBS) and having at least two of the following features:
- elongation at break between 30% and 40% (ISO 527-1);
- tensile elastic modulus between 4000 and 4500 MPa (ISO 527-1).

5. The capsule (1) according to claim 1, wherein the cup (2) is made of a compostable material comprising polyhydroxyalkanoate (PHA) and having at least two of the following features:
- tensile strength between 30 and 35 MPa (ISO 527-1);
- tensile elongation at break between 2% and 5% (ISO 527-1);
- elastic modulus between 1500 and 2500 MPa (ISO 527-1).

6. The capsule (1) according to any of the preceding claims, wherein the compostable material of the disc (5) has:
- breaking load (ISO Standard 527 1-3) MD between 85 and 95 MPa, TD between 35 and 45 MPa; and/or
- elongation at break (ISO Standard 527 1-3) MD between 10 and 20%, TD between 40 and 50.

7. The capsule (1) according to any of the preceding claims, wherein the disc (5) is at least partially multilayer having an intermediate barrier layer of metallized cellulose or metallized cellophane and/or an upper outer layer made of paper or cellophane.

8. The capsule (1) according to any of the preceding claims, wherein the disc (5) is at least partially rigid and made of the same material as the cup (2).

9. The capsule (1) according to any of the preceding claims, wherein the bottom (3) of the cup (2) is externally reinforced by outer reinforcement fins (81) arranged radially and at the labyrinth portion (320), said outer reinforcement fins (81) being present in a number greater than 15.

10. The capsule (1) according to any of the preceding claims, wherein the bottom (3) of the cup (2) is externally reinforced by central reinforcements (82), arranged radially and at the central portion (310).

11. The capsule (1) according to any of the preceding claims, wherein the disc (5) is composed of a central portion (51) permanently fastened to the labyrinth portion (320), and an outer annular portion (52) permanently fastened to the perimeter edge (360), wherein the central portion (51) and the outer annular portion (52) are fastened to each other in an at least partially releasable manner, and one between the central portion (51) and the outer annular portion (52) is a flexible film, and wherein due to the increase in pressure said flexible disc portion (5) separates at least partially from the rigid portion of the disc (5) opening at least one passageway (P) for the outflow of the beverage.

12. The capsule (1) according to claim 11, wherein an edge of the flexible portion is fastened below an edge of the rigid portion.

13. The capsule (1) according to claim 11 or 12, wherein the central portion (51) of the disc (5), intended to cover the labyrinth portion (320), is a rigid disc and the annular portion (52) is a flexible film.

14. The capsule (1) according to claim 11, wherein the central portion (51) of the disc (5), intended to cover the labyrinth portion (320), is a flexible film and the annular portion (52) is rigid.

## Patentansprüche

1. Kompostierbare Kapsel (1) zum Zubereiten von Aufguss- oder löslichen Getränken, umfassend:
- einen Becher (2), in dem ein Innenvolumen (V) definiert ist, in dem mindestens eine aufzugießende oder aufzulösende Substanz (S) enthalten ist; wobei der Becher (2) bereitgestellt wird:
-- auf einer Seite mit einem Boden (3) mit einer Auslassöffnung (31) für das Getränk,
-- auf der gegenüberliegenden Seite mit einer Einlassöffnung (21) für eine Flüssigkeit;
-- innen mit einer inneren Basis (33), umfassend:
--- einen zentralen Abschnitt (310), der die Öffnung (31) abdeckt,
--- einen Labyrinthabschnitt (320), der um den zentralen Abschnitt (310) herum angeordnet ist,
--- eine Umfangskante (360), die um den zentralen Abschnitt (310) herum angeordnet ist,
--- eine Getränkesammelmulde (330), die zwischen der Umfangskante (360) und dem Labyrinthabschnitt (230) angeordnet ist,
--- eine Getränkefördermulde (340), die zwischen dem Labyrinthabschnitt (230) und dem zentralen Abschnitt (310) angeordnet ist;
- einen Deckel (6), der dichtend an dem Becher (2) befestigt ist, um die Öffnung (21) zu verschließen;
- eine mindestens teilweise flexible Dichtungsscheibe (5), die dichtend an der inneren Basis (33) des Bechers (2) befestigt ist, um zusammen mit dem Deckel (6) eine Abdichtung des Innenvolumens (V) sicherzustellen;
wobei die Öffnung für den Ausfluss des Getränks durch die mindestens teilweise Verformung der Dichtungsscheibe (5) bestimmt wird, eine Verformung, die die Abdichtung des Volumens (V) löst,
wobei der Becher (2), der Deckel (6) und die Dichtungsscheibe (5) aus kompostierbarem Material bestehen;
**dadurch gekennzeichnet, dass** der Becher (2), die Dichtungsscheibe (5) und der Deckel Polymilchsäure (PLA) und/oder Polybutylensuccinat (PBS) und/oder Polyhydroxyalkanoat (PHA) umfassen.

2. Kapsel (1) nach Anspruch 1, wobei der Becher (2) aus kompostierbarem Material besteht, das mindestens eines der folgenden Merkmale aufweist:
- Streckgrenze (tensile yield strength) zwischen 30 und 50 MPa (ASTM-Standard D638) oder zwischen 35 und 50 (ISO 527-1);
- Zug-Bruchdehnung größer oder gleich 10 % (ASTM-Standard D638) oder von 10 % bis 35 % (ISO 527-1);
- Biegeelastizitätsmodul zwischen 2000 und 2500 MPa (ASTM D790) oder zwischen 2000 und 4500 MPa (ISO 527-1).

3. Kapsel (1) nach einem der vorhergehenden Ansprüche, wobei der Becher (2) aus kompostierbarem Material besteht, das Polymilchsäure (PLA) umfasst und mindestens zwei der folgenden Merkmale aufweist:
- Streckgrenze zwischen 30 und 40 MPa (ASTM-Standard D638);
- Zug-Bruchdehnung größer gleich 10 % (ASTM-Standard D638);
- Biegeelastizitätsmodul zwischen 2000 und 2500 MPa (ASTM D790).

4. Kapsel (1) nach Anspruch 1 oder 2, wobei der Becher (2) aus einem kompostierbarem Material besteht, das Polybutylensuccinat (PBS) umfasst und mindestens zwei der folgenden Merkmale aufweist:
- Bruchdehnung zwischen 30 % und 40 % (ISO 527-1);
- Zugelastizitätsmodul zwischen 4000 und 4500 MPa (ISO 527-1).

5. Kapsel (1) nach Anspruch 1, wobei der Becher (2) aus einem kompostierbaren Material besteht, das Polyhydroxyalkanoat (PHA) umfasst und mindestens zwei der folgenden Merkmale aufweist:
- Zugfestigkeit (tensile strength) zwischen 30 und 35 MPa (ISO 527-1);
- Zug-Bruchdehnung zwischen 2 % und 5 % (ISO 527-1);
- Elastizitätsmodul zwischen 1500 und 2500 MPa (ISO 527-1).

6. Kapsel (1) nach einem der vorhergehenden Ansprüche, wobei das kompostierbare Material der Scheibe (5) aufweist:
- Bruchlast (ISO-Standard 527 1-3) MD zwischen 85 und 95 MPa, TD zwischen 35 und 45 MPa; und/oder
- Bruchdehnung (ISO-Standard 527 1-3) MD zwischen 10 und 20 %, TD zwischen 40 und 50.

7. Kapsel (1) nach einem der vorhergehenden Ansprüche, wobei die Scheibe (5) mindestens teilweise mehrschichtig ist und eine Zwischen-Barriereschicht aus metallisierter Cellulose oder metallisiertem Cellophan und/oder eine obere äußere Schicht bestehend aus Papier oder Cellophan aufweist.

8. Kapsel (1) nach einem der vorhergehenden Ansprüche, wobei die Scheibe (5) mindestens teilweise starr ist und aus dem gleichen Material wie der Becher (2) besteht.

9. Kapsel (1) nach einem der vorhergehenden Ansprüche, wobei der Boden (3) des Bechers (2) außen verstärkt ist durch äußere Verstärkungsrippen (81), die radial und an dem Labyrinthabschnitt (320) angeordnet sind, wobei die äußeren Verstärkungsrippen (81) in einer Anzahl von mehr als 15 vorliegen.

10. Kapsel (1) nach einem der vorhergehenden Ansprüche, wobei der Boden (3) des Bechers (2) außen verstärkt ist durch zentrale Verstärkungen (82), die radial und an dem zentralen Abschnitt (310) angeordnet sind.

11. Kapsel (1) nach einem der vorhergehenden Ansprüche, wobei die Scheibe (5) aufgebaut ist aus einem zentralen Abschnitt (51), der dauerhaft an dem Labyrinthabschnitt (320) befestigt ist, und einem äußeren ringförmigen Abschnitt (52), der dauerhaft an der Umfangskante (360) befestigt ist, wobei der zentrale Abschnitt (51) und der äußere ringförmige Abschnitt (52) auf eine mindestens teilweise lösbare Weise aneinander befestigt sind und zwischen dem zentralen Abschnitt (51) und dem äußeren ringförmigen Abschnitt (52) eine flexible Folie ist, und wobei sich der flexible Scheibenabschnitt (5) aufgrund des Druckanstiegs mindestens teilweise von dem starren Abschnitt der Scheibe (5) trennt und mindestens einen Durchgang (P) für den Ausfluss des Getränks öffnet.

12. Kapsel (1) nach Anspruch 11, wobei eine Kante des flexiblen Abschnitts unter einer Kante des starren Abschnitts befestigt ist.

13. Kapsel (1) nach Anspruch 11 oder 12, wobei der zentrale Abschnitt (51) der Scheibe (5), der dazu bestimmt ist, den Labyrinthabschnitt (320) abzudecken, eine starre Scheibe ist und der ringförmige Abschnitt (52) eine flexible Folie ist.

14. Kapsel (1) nach Anspruch 11, wobei der zentrale Abschnitt (51) der Scheibe (5), der dazu bestimmt ist, den Labyrinthabschnitt (320) abzudecken, eine flexible Folie ist und der ringförmige Abschnitt (52) starr ist.

## Revendications

1. Capsule compostable (1) destinée à la préparation de boissons infusées ou solubles, comprenant :
- une coupelle (2) dans laquelle est défini un volume interne (V) dans lequel est contenue au moins une substance (S) à infuser ou à dissoudre ; ladite coupelle (2) étant dotée :
-- sur un côté, d'un fond (3) avec une ouverture de sortie (31) pour la boisson,
-- sur le côté opposé, d'une ouverture d'entrée (21) d'un fluide ;
-- à l'intérieur, d'une base interne (33) comprenant :
--- une partie centrale (310) recouvrant l'ouverture (31),
--- une partie labyrinthe (320) agencée autour de la partie centrale (310),
--- un bord périphérique (360) agencé autour de la partie centrale (310),
--- un creux de collecte de boisson (330) agencé entre le bord périphérique (360) et la partie labyrinthe (230),
--- un creux de transport de boisson (340) agencé entre la partie labyrinthe (230) et la partie centrale (310) ;
- un couvercle (6) fixé de manière étanche à la coupelle (2), pour fermer l'ouverture (21) ;
- un disque d'étanchéité au moins partiellement souple (5) fixé de manière étanche sur la base interne (33) de la coupelle (2) pour assurer, conjointement avec le couvercle (6), une étanchéité du volume interne (V) ;
dans laquelle l'ouverture pour l'écoulement de la boisson est déterminée par la déformation au moins partielle du disque d'étanchéité (5), une déformation qui provoque la perte de l'étanchéité du volume (V);
dans laquelle la coupelle (2), le couvercle (6) et le disque d'étanchéité (5) sont constitués d'un matériau compostable ;
**caractérisée en ce que** la coupelle (2), le disque d'étanchéité (5) et le couvercle comprennent de l'acide polylactique (PLA) et/ou du polybutylène succinate (PBS) et/ou du polyhydroxyalcanate (PHA).

2. Capsule (1) selon la revendication 1, dans laquelle la coupelle (2) est constituée d'un matériau compostable présentant au moins l'une des caractéristiques suivantes :
- limite apparente d'élasticité comprise entre 30 et 50 MPa (norme ASTM D638) ou entre 35 et 50 (ISO 527-1) ;
- allongement à la rupture par traction supérieur ou égal à 10 % (norme ASTM D638) ou de 10 % à 35 % (ISO 527-1) ;
- module d'élasticité en flexion compris entre 2 000 et 2 500 MPa (ASTM D790) ou entre 2 000 et 4 500 MPa (ISO 527-1).

3. Capsule (1) selon l'une quelconque des revendications précédentes, dans laquelle la coupelle (2) est constituée d'un matériau compostable comprenant de l'acide polylactique (PLA) et présentant au moins deux des caractéristiques suivantes :
- limite apparente d'élasticité comprise entre 30 et 40 MPa (norme ASTM D638) ;
- allongement à la rupture par traction supérieur ou égal à 10 % (norme ASTM D638) ;
- module d'élasticité en flexion compris entre 2 000 et 2 500 MPa (ASTM D790).

4. Capsule (1) selon la revendication 1 ou 2, dans laquelle la coupelle (2) est constituée d'un matériau compostable comprenant du polybutylène succinate (PBS) et présentant au moins deux des caractéristiques suivantes :
- allongement à la rupture compris entre 30 % et 40 % (ISO 527-1) ;
- module d'élasticité en traction compris entre 4 000 et 4 500 MPa (ISO 527-1).

5. Capsule (1) selon la revendication 1, dans laquelle la coupelle (2) est constituée d'un matériau compostable comprenant du polyhydroxyalcanate (PHA) et présentant au moins deux des caractéristiques suivantes :
- résistance à la traction comprise entre 30 et 35 MPa (ISO 527-1) ;
- allongement à la rupture par traction compris entre 2 % et 5 % (ISO 527-1) ;
- module d'élasticité compris entre 1 500 et 2 500 MPa (ISO 527-1).

6. Capsule (1) selon l'une quelconque des revendications précédentes, dans laquelle le matériau compostable du disque (5) présente :
- charge de rupture (norme ISO 527 1-3) MD comprise entre 85 et 95 MPa, TD comprise entre 35 et 45 MPa ; et/ou
- allongement à la rupture (norme ISO 527 1-3) MD compris entre 10 et 20 %, TD compris entre 40 et 50.

7. Capsule (1) selon l'une quelconque des revendications précédentes, dans laquelle le disque (5) est au moins partiellement multicouche ayant une couche barrière intermédiaire de cellulose métallisée ou de cellophane métallisée et/ou une couche externe supérieure constituée de papier ou de cellophane.

8. Capsule (1) selon l'une quelconque des revendications précédentes, dans laquelle le disque (5) est au moins partiellement rigide et constitué du même matériau que la coupelle (2).

9. Capsule (1) selon l'une quelconque des revendications précédentes, dans laquelle le fond (3) de la coupelle (2) est renforcé extérieurement par des ailettes de renfort externes (81) agencées radialement et au niveau de la partie labyrinthe (320), lesdites ailettes de renfort externes (81) étant présentes en un nombre supérieur à 15.

10. Capsule (1) selon l'une quelconque des revendications précédentes, dans laquelle le fond (3) de la coupelle (2) est renforcé extérieurement par des renforts centraux (82), agencés radialement et au niveau de la partie centrale (310).

11. Capsule (1) selon l'une quelconque des revendications précédentes, dans laquelle le disque (5) est composé d'une partie centrale (51) fixée de manière permanente à la partie labyrinthe (320), et d'une partie annulaire externe (52) fixée de manière permanente au bord périphérique (360), dans laquelle la partie centrale (51) et la partie annulaire externe (52) sont fixées l'une à l'autre d'une manière au moins partiellement libérable, et l'une parmi la partie centrale (51) et la partie annulaire externe (52) est un film souple, et dans laquelle, en raison de l'augmentation de pression, ladite partie de disque souple (5) se sépare au moins partiellement de la partie rigide du disque (5) ouvrant au moins un passage (P) pour l'écoulement de la boisson.

12. Capsule (1) selon la revendication 11, dans laquelle un bord de la partie souple est fixé sous un bord de la partie rigide.

13. Capsule (1) selon la revendication 11 ou 12, dans laquelle la partie centrale (51) du disque (5), destinée à recouvrir la partie labyrinthe (320), est un disque rigide et la partie annulaire (52) est un film souple.

14. Capsule (1) selon la revendication 11, dans laquelle la partie centrale (51) du disque (5), destinée à recouvrir la partie labyrinthe (320), est un film souple et la partie annulaire (52) est rigide.
